Europäisches Patentamt

European Patent Office

Office européen des brevets

(11) Veröffentlichungsnummer: **0 188 189**
**B1**

# EUROPÄISCHE PATENTSCHRIFT

(45) Veröffentlichungstag der Patentschrift:
**07.12.88**

(21) Anmeldenummer: **85890319.8**

(22) Anmeldetag: **30.12.85**

(51) Int. Cl.⁴: **G 01 B 21/02**

(54) **Gekapselte Längenmesseinrichtung.**

(30) Priorität: **11.01.85 AT 56/85**

(43) Veröffentlichungstag der Anmeldung:
**23.07.86 Patentblatt 86/30**

(45) Bekanntmachung des Hinweises auf die Patenterteilung:
**07.12.88 Patentblatt 88/49**

(84) Benannte Vertragsstaaten:
**BE CH DE FR GB IT LI LU NL SE**

(56) Entgegenhaltungen:
**EP-A- 0 143 773**
**DE-A- 2 710 312**
**FR-A- 1 601 631**
**US-A- 3 816 003**
**US-A- 4 400 890**

(73) Patentinhaber: **RSF-Elektronik Gesellschaft m.b.H.,**
**A-5121 Tarsdorf.93 (AT)**

(72) Erfinder: **Rieder, Heinz, A-5120 St. Pantaleon (AT)**
Erfinder: **Schwaiger, Max,**
**A-5121 Ostermiething 298 (AT)**

(74) Vertreter: **Hübscher, Gerhard, Dipl.-Ing. et al,**
**Patentanwälte Dipl.-Ing. Gerhard Hübscher Dipl.-Ing.**
**Helmut Hübscher Dipl.-Ing. Heiner Hübscher**
**Spittelwiese 7, A-4020 Linz (AT)**

## Beschreibung

Die Erfindung betrifft eine Längenmesseinrichtung nach dem einleitenden Teil des Patentanspruches 1.

Insbesondere betrifft die Erfindung inkrementale Längenmesseinrichtungen, die mit optoelektronischer, kapazitiver, induktiver oder magnetischer Abtastung eines entsprechend ausgestalteten Massstabes arbeiten.

Längenmesseinrichtungen der gegenständlichen Art werden beispielsweise an Werkzeugmaschinen angebracht, sie können sowohl zur normalen Längenmessung Verwendung finden als auch Bestandteile einer Steuereinrichtung für die Werkzeugmaschine oder für einen Industrieroboter sein.

Eine Längenmesseinrichtung nach dem einleitenden Teil des Anspruches 1 ist aus der US—A—4 400 890 bekannt geworden. Hier ist ein nach oben freiliegender Massstab aus Dauermagneten mit einer Einzellänge von wenigstens 2 mm vorhanden. Es sind zwei im Abstand voneinander angeordnete Abtastköpfe vorgesehen, welche bei der Relativverstellung der Abtasteinheit zum Massstab die Signale erzeugen. Der Massstab ist nach oben offen am Bett einer Werkzeugmaschine angebracht. Die haubenartige Abdeckung hat die Breite des Massstabes und stützt sich mit an den Enden quer angebrachten Abstreifern am Massstab ab. Aufgabe der Abstreifer ist es, grobe Verunreinigungen, insbesondere Teilchen aus magnetisch leitendem Material vom Massstab zu entfernen. Die erwähnte bekannte Messeinrichtung ermöglicht nur grobe Messungen, wobei auch keine hohe Messgenauigkeit erzielt wird.

Zur Erzielung einer höheren Messgenauigkeit werden wesentlich feiner unterteilte Inkrementalmassstäbe verwendet, mit denen entsprechende Abtasteinheiten zusammenarbeiten. Beispiele für den Aufbau solcher Längenmesseinrichtungen, die mit optoelektronischer Abtastung arbeiten, einen feinen Massstab besitzen und bei denen überdies durch elektronische Schaltmassnahmen eine weitere Auswertung der bei der Abtastung erhaltenen Signale, insbesondere phasenversetzt erzeugter Signale, im Sinne einer elektronischen Feinunterteilung des Masstabes durch Brücken- oder Potentiometerschaltungen bzw. Interpolationsrechner möglich ist, sind in der US—A—3 816 003 und der EP—A2—0 120 205 angegeben. Je feiner die Auflösung ist, desto grösser wird die Anfälligkeit der Längenmesseinrichtung gegen Massstabverschmutzung, Tröpfchenniederschlag am Massstab und auch gegen entsprechende Verschmutzungen der Abtasteinheiten selbst. Es ist daher üblich, bei solchen Längenmesseinrichtungen den gesamten meist aus Glas hergestellten Massstab in einem rohrförmigen Gehäuse zu kapseln und die Abtasteinheit über ein zwischen Dichtlippenpaaren durch einen Schlitz des Gehäuses herausgeführtes Schwert zu betätigen. Bei optischer Abtastung kann die Abtastung im Durchlichtverfahren mit an der einen Seite des Massstabes geführten Beleuchtungseinrichtungen und an der anderen Seite vorgesehenen Empfängern oder auch im Auflicht- oder Reflexionverfahren erfolgen, bei dem Beleuchtungseinrichtung und Empfänger an der gleichen Massstabseite angeordnet sind und die Massstabrückseite gegebenenfalls verspiegelt wird.

Um die Verschmutzungsgefahr bzw. die Gefahr eines Feuchtigkeitsniederschlages zu verringern, werden nach der US—A—3 816 003 im Gehäusespalt zwei übereinander angeordnete Dichtlippenpaare verwendet, die mit dem Schwert zusammenwirken, doch liegen die vom Schwert erzeugten Öffnungsspalte mit ihrem Anfang und Ende übereinander, so dass Feuchtigkeit und Staub ins Gehäuseinnere eindringen können.

Nach der EP—A2—0120 205 werden für den Betrieb im Durchlichtverfahren die Beleuchtungs- und die Abtasteinrichtungen in gesonderten Kammern gekapselt oder für den Betrieb im Auflichtverfahren in einer gemeinsamen Kammer untergebracht, die mit einem auch ein Abtastgitter für den Massstab enthaltenden Fenster aus durchsichtigem Material ganz nahe am Massstab geführt wird. Die Führung erfolgt in gesonderten Teilen des Kapselgehäuses. Dabei wird angestrebt, den Spalt zwischen Fenster bzw. Abtastgitter und Massstab so klein zu halten, dass ein allfälliger Tröpfchenniederschlag am Massstab in einen Flüssigkeitsfilm zwischen Fenster und Massstab umgewandelt wird. Trotz der äusserst aufwendigen Konstruktion ist auch hier das Problem der Massstabverschmutzung und der allfälligen Verfälschung des Messergebnisses durch den Tröpfchenniederschlag nicht gelöst.

Aufgabe der Erfindung ist die Schaffung einer Längenmesseinrichtung, bei der mit einfachen Mitteln das Problem der Verschmutzung des Massstabes und der möglichen Verfälschungen des Messergebnisses durch Tröpfchen oder Feuchtigkeit beseitigt wird.

Die gestellte Aufgabe wird prinzipiell durch die Merkmale des Anspruches 1 gelöst.

Die Dichtlippen bzw. der Dichtungsrand gleiten über den Massstab und kapseln den Messraum nach aussen ab. Der Massstab wird immer in einen unmittelbar vorher vom Dichtungsrand gereinigten Bereich abgetastet. Der Messraum hat nur ein kleines Volumen und kann also selbst bei feuchter Luft nur eine verschwindend kleine Feuchtigkeitsmenge enthalten. Kommt es zu einem Feuchtigkeitsniederschlag am Massstab, so liegt die jeweilige Abtasteinheit im Messraum einem Massstabbereich gegenüber, der unmittelbar vorher abgestreift wurde. Es kommt deshalb im Messbereich zu keinen Feuchtigkeitsniederschlägen. Bei optoelektronischer Abtastung werden die lichtempfindlichen Empfänger, allenfalls verwendete Abtastgitter usw. durch die Beleuchtungseinrichtungen erwärmt. Diese Erwärmung ist bei Verwendung von Leuchtdioden zwar minimal, reicht aber aus, um innerhalb des Messraumes einen Feuchtigkeitsniederschlag an den messenden oder abgetasteten Teilen zu verhindern.

Durch die Ausführung nach Unteranspruch 2 wird erreicht, dass Staub und Feuchtigkeit am Massstab nach aussen gedrängt werden. Überdies wird verhindert, dass die haubenartige Abdeckung trotz der Anpressung an den Massstab bei der Gleitverstellung zu vibrieren beginnt.

Nach Unteranspruch 3 kann man bei der optoelektronischen Abtastung und bei der Arbeit im Durchlichtverfahren die Beleuchtungseinrichtungen einerseits und die Abtastplatten und lichtempfindlichen Empfänger andererseits an gegenüberliegenden Massstabseiten in entsprechenden haubenartigen Abdeckungen kapseln.

Als zusätzliche Sicherheitsmassnahme werden nach Anspruch 4 wenigstens zwei Dichtlippenpaare vorgesehen und ein Schwert mit zwei versetzten Abschnitten verwendet. Dabei befindet sich gegenüber jedem Abschnitt des Schwertes wegen des Versatzes der Abschnitte ein geschlossener Bereich, der mit dem anderen Schwertabschnitt zusammenwirkenden Dichtlippenpaare. Schmutz und Feuchtigkeit werden also, wenn sie überhaupt durch die äusseren Dichtlippen eindringen können, weitestgehend in dem zwischen den Dichtlippenpaaren liegenden Raum zurückgehalten. Man könnte diesen Raum auch mit einer Druckluft- oder Schutzgasquelle verbinden und gegebenenfalls unter Überdruck setzen bzw. mit Hilfe von durchgeblasenem erwärmtem Schutzgas eine Vorerwärmung vornehmen.

Weitere Einzelheiten und Vorteile entnimmt man der nachfolgenden Zeichnungsbeschreibung.

In der Zeichnung ist der Erfindungsgegenstand beispielsweise veranschaulicht. Es zeigt

Fig. 1 eine erfindungsgemässe Längenmesseinrichtung schematisiert im Längsschnitt durch ein die Messeinrichtung kapselndes, geschlitztes Rohr und die Abdeckhaube,

Fig. 2 einen Querschnitt zu Fig. 1 und

Fig. 3 in der Fig. 1 entsprechender Darstellungsweise eine weitere Längenmesseinrichtung.

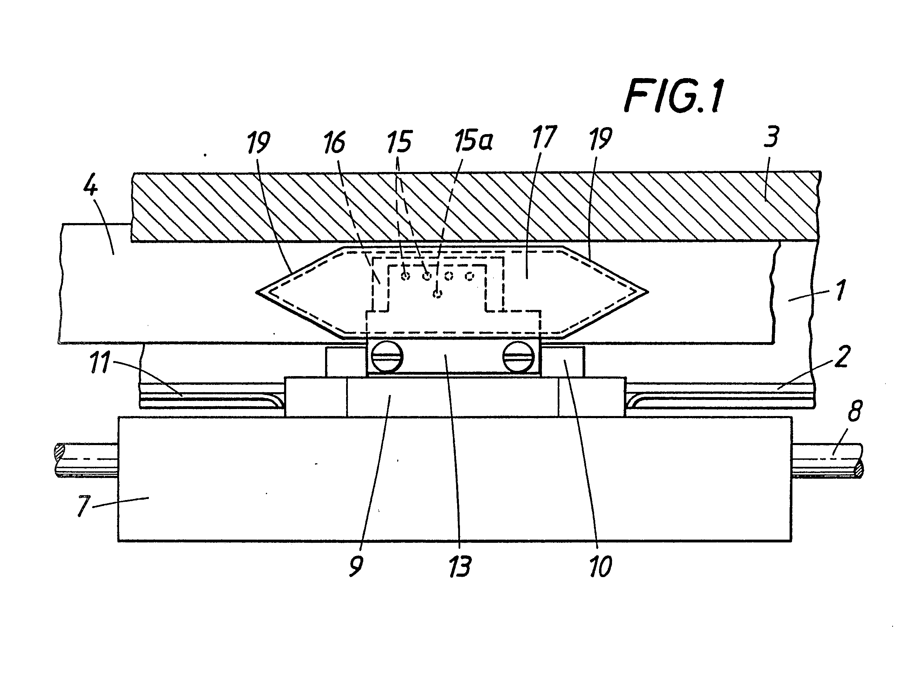

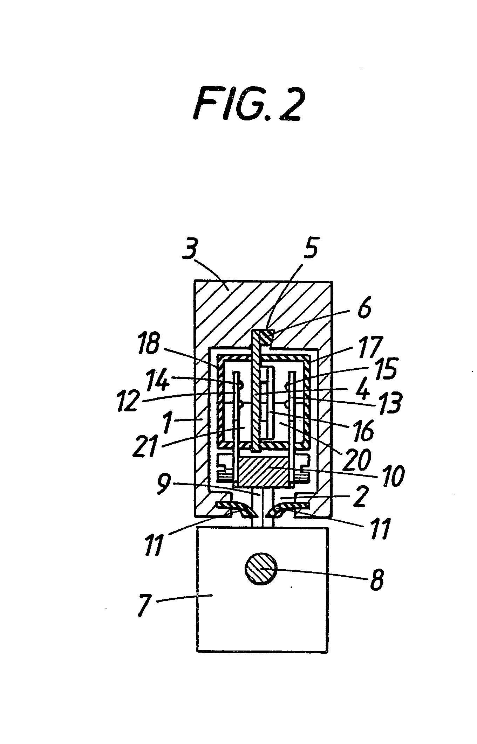

Die Längenmesseinrichtung nach den Fig. 1 und 2 besitzt einen meist aus einem Strangpressprofil bestehenden Träger 1 in Form eines unten mit einem Schlitz 2 versehenen Rechteckrohres, dessen obere Wandung 3 zur Erzielung der notwendigen Biegesteifigkeit stark verdickt ist. Beim Ausführungsbeispiel ist in der Höhlung des Rechteckrohres 1 ein Glasmassstab 4 dadurch befestigt, dass dieser Massstab mit einem Rand in eine Nut 5 eingelegt und dort durch ein gummielastisches Band 6 festgeklemmt ist. Der in die Höhlung einragende Hauptteil des Massstabes 4 trägt eine Inkrementalteilung aus einem Strichraster und gegebenenfalls auf einer parallel dazu verlaufenden Spur Strichgruppen zur Bestimmung von Referenzmarken od. dgl.

Ein dem zu messenden Objekt zugeordneter Messfühler trägt ein Ankoppelungsstück 7, das z. B. gemeinsam mit einem Messerhalter auf der Spindel 8 einer Werkzeugmaschine geführt ist, ein durch den Schlitz 2 einragendes Schwert 9 und einen Messwagen 10, der Bestandteil einer in der Höhlung untergebrachten Abtasteinheit ist. Das Schwert 9 greift mit Schlitz 2 zwischen Dichtlippen 11 ein.

Am Messwagen 10 sind einander gegenüberliegend und zu beiden Seiten des Massstabes 4 Platinen 12, 13 angeordnet, von denen die eine (12) Leuchtdioden 14 und die andere (13) Phototransistoren 15 oder Photodioden als lichtempfindliche Empfänger trägt. Ein Phototransistor 15a dient der Abtastung der Referenzmarken.

An der die Messeinteilung tragenden Seite des Massstabkörpers 4 ist auf dem Massstab eine Abtastplatte 16 mit Gleitern geführt, welche Abtastplatte in den Leuchtdioden 14 und Phototransistoren 15, 15a entsprechender Anordnung Abtastgitter für den Massstab bzw. die Referenzmarkenspur trägt.

Zur Vereinfachung der Darstellung wurde die Halterung der Abtastplatte 16 nicht dargestellt. Die Abtastplatte kann bei einer Ausführung starr mit dem Messwagen 10 verbunden sein. Nach einer anderen Ausführung ist diese Abtastplatte 16 am Massstab geführt und über eine Antriebseinrichtung mit einer Korrektursteuereinrichtung verbunden, die beispielsweise aus einer in der Höhlung des Rohres 1 untergebrachten Korrekturkurve und einem Fühler besteht, der die Abtastplatte entsprechend dem Verlauf der Korrekturkurve geringfügig vor- oder zurückverstellt. Die Korrektursteuereinrichtung und die Stelleinrichtung für die Abtastplatte können zum Teil ausserhalb der nun zu beschreibenden Abdeckungen angebracht und mit der Abtastplatte über Durchführungen dieser Abdeckungen verbunden sein.

An beiden Seiten des Massstabes 4 ist je eine haubenartige Abdeckung 17, 18 aus gummielastischem Material angebracht, die zum Massstab hin offen ist, mit dichtlippenartig ausgebildeten Rändern gegen den Masstab gedrückt wird und die sich nach beiden Enden 19 schneepflugartig verjüngt. Die Platinen 12, 13 sind durch Schlitze der Abdeckung abgedichtet in den jeweiligen von der Abdeckung 17, 18 und dem Massstabkörper 4 eingeschlossenen Messraum 20, 21 geführt. Am Messwagen 9 können weitere Halterungen für die Abdeckungen 17, 18 vorgesehen sein, durch die gewährleistet wird, dass die Ränder der Abdeckungen 17, 18 an dem Massstabkörper 4 angedrückt werden.

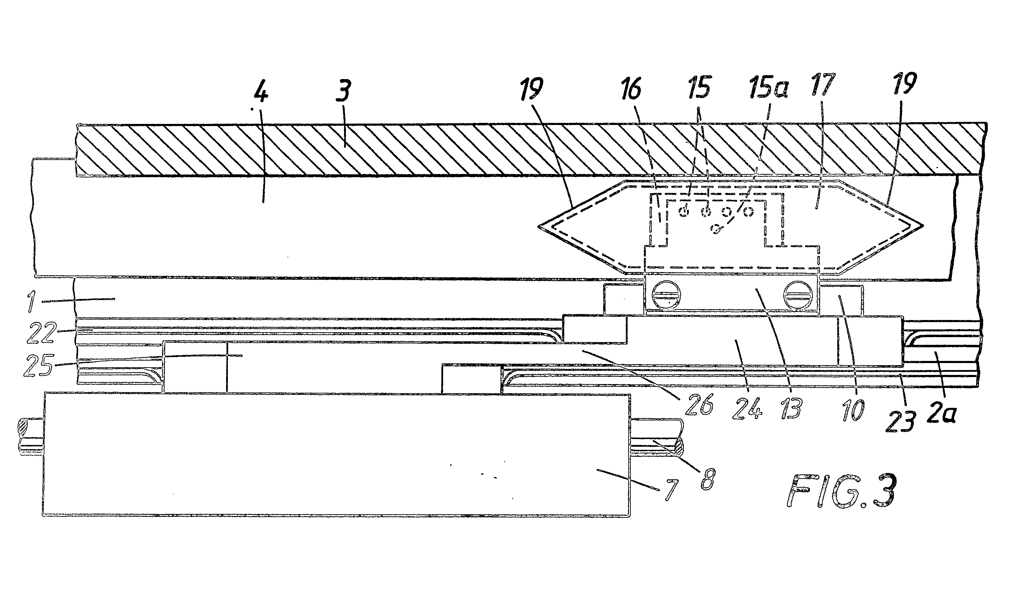

Die Ausführung nach Fig. 3 besitzt mit Ausnahme des näher zu beschreibenden Schlitzbereiches weitgehende Übereinstimmungen mit der Konstruktion nach den Fig. 1 und 2, weshalb für alle übrigen Teile die gleichen Bezugszeichen wie dort verwendet wurden. Es ist auch die untere, mit dem Schlitz 2a versehene Wandung des Rechteckrohres 1 verdickt ausgeführt, so dass im Bereich des inneren und äusseren Schlitzrandes Platz für die Unterbringung eines inneren Dichtlippenpaares 22 und eines äusseren Dichtlippenpaares 23 freibleibt. Jedes Dichtlippenpaar 22, 23 wirkt mit einem Schwertabschnitt 24, 25 zusammen. Die beiden Schwertabschnitte 24, 25 sind mit der Abtasteinheit bzw. dem Ankoppelungsstück 7 und innerhalb des nach aussen und innen durch die Dichtlippen 22 bzw. 23 abgeschlossenen Schlitzraumes durch ein Verbindungsstück 26 verbunden. Dabei sind die Abschnitte 24, 25 gegeneinander in Längsrichtung des Trägers 1 versetzt, so dass ihre zueinander weisenden Enden noch Abstand voneinander haben. Dem Schwertabschnitt 24 liegt daher beim Betrieb das geschlossene äussere Dichtlippenpaar 23 und dem Schwertabschnitt 25 das geschlossene innere Dichtlippenpaar 22 gegenüber. Durch seitliche Bohrungen oder Endanschlüsse kann der zwischen den Dichtlippen 22, 23 eingeschlossene Schlitzraum mit über einen Filter geführter Druckluft bzw. einem Schutzgas beaufschlagt werden. Diese Luft kann bei auftretenden Undichtheiten zwischen den äusseren Dichtlippen 23 bzw. diesen Dichtlippen und dem Schwertabschnitt 25 entweichen, wird also das Eindringen von Aussenluft und Staub in den gekapselten Innenraum des Trägers 1 verhindern.

Haubenartige Abdeckungen 17 und eine der Fig. 3 entsprechende Schlitzabdichtung können auch bei Messsystemen mit kapazitiver, induktiver oder magnetischer Abtastung zur Bildung eines gekapselten Messraumes um den Massstab im Bereich der jeweiligen Abtasteinheit und zur Abdichtung des gekapselten Innenraumes des Trägers eingesetzt werden.

**Patentansprüche**

1. Längenmesseinrichtung, mit einem an einem Träger (1) angebrachten Massstab (4) und einer entlang des Massstabes (4) verstellbaren Abtasteinheit (10) mit Signalerzeugern (15, 15a), die in einer haubenartigen Abdeckung (17) untergebracht sind, welche gegen den Massstab (4) zu offen ist, mit diesem einen Messraum (20,21) umschliesst und mit Abstreifern aus gummielastischem Material am Massstab (4) anliegt, dadurch gekennzeichnet, dass die Abstreifer der haubenartigen Abdeckung (17, 18) zu einem in sich geschlossenen, für die Anlage am Massstab (4) bestimmten Dichtungsrand aus gummielastischem Material ergänzt sind, der den Messraum (20, 21) nach aussen abdichtet.

2. Längenmesseinrichtung nach Anspruch 1, dadurch gekennzeichnet, dass die haubenartige Abdeckung (17, 18) an beiden Längsenden (19) bugoder schneepflugartig ausgebildet ist und mit dem entsprechend geformten Dichtungsrand am Massstab (4) anliegt.

3. Längenmesseinrichtung nach Anspruch 1 oder 2, dadurch gekennzeichnet, dass bei einer optoelektronischen Abtasteinheit mit aus Abtastplatte (16), lichtempfindlichen Empfängern (15, 15a) und zugeordneten, an der gegenüberliegenden Massstabseite befindlichen Beleuchtungseinrichtungen (14) bestehenden Signalerzeugern die Abtastplatte (16) mit den lichtempfindlichen Empfängern (15, 15a) einerseits und die Beleuchtungseinrichtungen (14) andererseits in je einer einen durch den Dichtungsrand abgedichteten Raum bestimmenden, haubenartigen Abdeckung (17, 18) untergebracht sind.

4. Gekapselte Längenmesseinrichtung nach einem der Ansprüche 1 bis 3, bei der die Signalerzeuger (15a) tragende Abtasteinheit (10a) über ein Schwert (24, 25) mit einer ausserhalb eines Massstab (4) und Abtasteinheit (10) kapselnden Gehäuses (1) angeordneten Messfühler verbunden ist, wobei das Schwert (24, 25) durch einen Gehäusespalt zwischen wenigstens zwei Paaren von inneren und äusseren elastischen, gegeneinander drückenden Dichtlippen (22, 23) herausgeführt ist, und dass das Schwert aus wenigstens zwei in Gehäuselängsrichtung gegeneinander versetzten Abschnitten (24, 25) besteht, von denen der eine (24) mit der in der haubenartigen Abdeckung (17, 18) gekapselten Abtasteinheit verbunden ist und zwischen den inneren Dichtlippen (22) eingreift, der andere Abschnitt (25) mit dem Messfühler (7) verbunden ist und zwischen den äusseren Dichtlippen (23) eingreift und die beiden Abschnitte (24, 25) untereinander in dem zwischen den Dichtlippenpaaren (22, 23) eingeschlossenen Raum (2a) verbunden sind.

**Claims**

1. A length measuring instrument comprising a scale member (4), which is attached to a carrier (1), and a scanning unit (10), which is movable along the scale (4) and is provided with signal generators (15, 15a), which are accomodated in a covering hood (17), which is open towards the scale member and together with the scale member encloses a measuring chamber (20, 21) and comprises scrapers, which are made of rubber-elastic material and in contact with the scale member (4), characterized in that the scrapers of the covering hood (17, 18) are supplemented to constitute a sealing rim, which is made of rubber-elastic material and is closed in itself and is intended to bear on the scale member (4) and seals the measuring chamber (20, 21) towards the outside.

2. A length measuring instrument according to claim 1, characterized in that the covering hood (17, 18) is formed like a bow or a snowplough at both ends (19) of its length and bears on the scale member (4) with a properly shaped sealing rim.

3. A length measuring instrument according to claim 1 or 2, characterized in that an optoelectronic scanning unit is provided, which comprises signal generators consisting of a scanning plate (16), light receivers (15, 15a) and associated illuminating means (14) disposed on the opposite side of the scale member, and the scanning plate (16) and the light receivers (15, 15a), on the one hand, and the illuminating means (14) on the other hand, are accommodated in respective covering hoods (17, 18) which define spaces which are sealed by the sealing rim.

4. An encapsulated length measuring instrument according to any of claims 1 to 3, wherein the scanning unit (10a) which carries the signal generators (15a) is connected by a sword (24, 25) to a measuring feeler, which is disposed outside a housing (1) in which the scale member (4) and the scanning unit (10) are encapsulated, the sword (24, 25) extends outwardly through a gap in the housing between at least two pairs of inner and outer sealing lips (22, 23), which apply pressure to each other, the sword consists of at least two sections (24, 25), which are mutually offset along the housing, one (24) of said sections is connected to the scanning unit, which is encapsulated in the covering hood (17, 18) and extends between the inner sealing lips (22), the other section (25) is connected to the measuring feeler (7) and extends between the outer sealing lips (23), and the two sections (24, 25) are interconnected in the space (2a) which is confined between the pairs of sealing lips (22, 23).

**Revendications**

1. Dispositif de mesure des longueurs, comprenant une règle graduée (4) disposée sur un support (1), et une unité de lecture (10) qui peut se déplacer le long de la règle graduée (4) et est munie de générateurs de signaux (15, 15a) qui sont logés dans une capsule (17) en forme de capot, capsule qui est ouverte vers la règle graduée (4), enferme un espace de mesure (20, 21) en combinaison avec celle-ci et est appuyée sur la règle graduée (4) par des racleurs faits d'une matière possédant l'élasticité du caoutchouc, caractérisé par le fait que les racleurs de la capsule, en forme de capot (17, 18), sont complétés pour former un bord d'etanchéité en matière possédant l'élasticité du caoutchouc, destiné à s'appuyer sur la règle graduée (4), qui est fermé sur lui-même et qui isole la chambre de mesure (20, 21) de l'extérieur à joint étanche.

2. Dispositif de mesure des longueurs selon la revendication 1, caractérisé par le fait que la capsule en forme de capot (17, 18) est en forme d'étrave ou de chasse-neige et est appuyée sur la règle graduée (4) par le bord d'étanchéité qui présente une forme correspondante.

3. Dispositif de mesure des longueurs selon l'une des revendications 1 et 2, caractérisé par le fait que, dans le cas d'une unité de lecture optoélectronique munie de générateurs de signaux et composée d'une plaque de lecture (16), de récepteurs photo-sensibles (15, 15a) et de dispositifs d'éclairage (14) associés aux récepteurs et qui se trouvent sur le côté opposé de la règle graduée, la plaque de lecture (16) avec les récepteurs photo-sensibles (15, 15a) d'une part, et les dispositifs d'éclairage (14), d'autre part, sont logés chacun dans une capsule (17, 18) en forme de capot, laquelle définit une chambre qui est fermée à joint étanche per le bord d'étanchéité.

4. Dispositif de mesure de longueurs protégé sous capsule selon l'une des revendications 1 à 3, caractérisé par le fait que, d'une part, l'unité de lecture (10a) qui porte les générateurs de signaux (15a) est reliée par l'intermédiaire d'une lame (24, 25) à un capteur de mesure disposé à l'extérieur d'un boîtier (1) qui renferme la règle graduée (4) et l'unité de lecture (10), la lame (24, 25) sortant à travers une fente du boîtier, entre au moins deux paires de lèvres d'étanchéité élastiques (22, 23) intérieures et extérieures et qui sont pressés l'une contre l'autre et, d'autre part, que la lame est composée d'au moins deux segments (24, 25) décalés l'un par rapport à l'autre dans la direction de la longueur du boîtier, dont l'un (24) est relié à l'unité de lecture enfermée dans la capsule en forme de capot (17, 18) et est engagé entre les lèvres d'étanchéité intérieures (22) et dont l'autre (25) est relié au capteur de mesure (7) et est engagé entre les lèvres d'étanchéité extérieures (23), les deux segments (24, 25) étant reliés l'un à l'autre dans la chambre (2a) enfermée entre les paires de lèvres d'étanchéité (22, 23).

FIG.1

EP 0 188 189 B1

# FIG.2

**FIG.3**